# EUROPÄISCHE PATENTSCHRIFT

(11) **EP 1 541 432 B1**
(45) Veröffentlichungstag und Bekanntmachung des Hinweises auf die Patenterteilung: **23.07.2008**
(21) Anmeldenummer: 04028293.1
(22) Anmeldetag: 30.11.2004
(51) Int. Cl.: B60R 21/34, E05B 65/19

(54) **Vorrichtung zum Schutz von Personen bei einem Frontalaufprall auf ein Kraftfahrzeug durch aktives Aufstellen dessen Fronthaube zumindest im frontseitigen Haubschlossbereich**
Apparatus for protection of pedestrians in a frontal vehicle crash through active upward movement of at least the frontal lock area of the hood
Dispositif pour protection d'un pieton dans une collision frontale a travers d'un mouvement ascendant actif d'au moins une zone frontale du capot où se trouve la serrure

(30) Priorität: 13.12.2003 DE 10358740
(43) Veröffentlichungstag der Anmeldung: 15.06.2005
(73) Patentinhaber: ISE Innomotive Systems Europe GmbH, 51702 Bergneustadt (DE)
(72) Erfinder: Lang, Jozsef, Dipl.-Ing., 1131 Budapest (HU); Röhner, Stephan, Dr., 44287 Dortmund (DE)
(74) Vertreter: Fuchs

(56) Entgegenhaltungen:
- EP-A- 0 926 018
- DE-A1- 10 155 661
- DE-A1- 19 721 565
- DE-A1- 19 957 868

## Beschreibung

Die Erfindung bezieht sich auf eine Vorrichtung zum Schutz von Personen bei einem Frontalaufprall auf ein Kraftfahrzeug durch aktives Aufstellen dessen Fronthaube zumindest im frontseitigen Bereich des Haubenschlosses, das ein fest mit der Fronthaube verbundenes, erstes Schließelement und ein in einem aufbauseitigen Schloßgehäuse beweglich gehaltertes zweites Schließelement aufweist, mit einem Aufstellelement, bestehend aus einem karosseriefesten Gehäuse und einem darin geführten Hubelement, das mit dem Schlossgehäuse des Haubenschlosses verbunden ist und das sensorgesteuert mittels eines Energiespeichers um einen vorgegebenen Hub unter Aufstellung der Fronthaube ausfahrbar ist, wobei das Hubelement zugleich als aufbauseitiges Schloßgehäuse ausgebildet ist.

Eine derartige Vorrichtung ist in etwa bekannt aus der DE 101 55 661 A1. Darin wird eine Schutzeinrichtung an einer verstellbaren Fahrzeughaube, die in einer Schließanlage von einem Haubenschloß der Fahrzeugkarosserie verriegelt ist, mit einer Sensoreinrichtung, die einen Aufprall eines Fußgängers auf das Fahrzeug erfasst, und einer Verstelleinrichtung, die von einer Sensoreinrichtung aktiviert die Fahrzeughaube in eine Stützlage anhebt, beschrieben. Als Besonderheit löst die von der Sensoreinrichtung aktivierte Verstelleinrichtung ein Verbindungsschloss und weist sie zwischen der Fahrzeughaube und einem Stützteil eine Druckfeder auf, die unter einer Druckbelastung der Druckfeder an das Stützteil angenähert und über das Verbindungsschloss an dem Stützteil verriegelt ist.

Weitere vergleichbare Einrichtungen sind bekannt aus der gattungsgemäßen DE 199 57 868 A1 und der EP-A-0 926 018.

Jährlich ereignen sich zahlreiche Unfälle, bei denen Fußgänger, seien es Kinder oder Erwachsene, bzw. Zweiradfahrer oder Skater, von einem Kraftfahrzeug angefahren, auf die Front- oder Motorhaube sowie gegen die Windschutzscheibe geschleudert werden, und dabei zumindest schwere Verletzungen erfahren. Dabei ist insbesondere der Kopf sowie der Oberkörper eines erwachsenen Fußgängers bzw. Zweirad-fahrers gefährdet, da dieser bei einem Zusammenprall mit einem Kraftfahrzeug - wie Crash-Versuche und auch die Erfahrungen gezeigt haben -, etwa im hinteren, relativ hartem Bereich an der Fronthaube am Übergang zur Windschutzscheibe aufschlägt und dabei erheblich verletzt wird.

Aufgrund von entsprechenden Forderungen arbeitet die Fahrzeugindustrie intensiv an dem Problem, den Personenschutz insoweit zu verbessern.

Es ist eine Reihe von Möglichkeiten zur Lösung dieses Problems bekannt geworden. Ein Lösungsprinzip besteht darin, den vorgenannten harten Übergangsbereich zur Windschutzscheibe zu entschärfen, d. h. nachgiebiger zu gestalten, z.B. durch einen sensorgesteuert aufblasbaren Luftsack oder gemäß DE 28 14 107 A in Verbindung mit der DE 28 41 315 durch eine mittels eines Aufprall-Sensors betätigte Vorrichtung zur Verstellung der Fronthaube aus einer Ruheposition in eine demgegenüber angehobene, nachgiebige Aufprallposition, d. h. eine sogenannte "aktive Fronthaube". Dadurch, dass die Fronthaube bei der von dem Aufprall-Sensor erfassten Kollision mit einem Fußgänger in eine gegenüber ihrer Ruhe - d. h. Normalfallstellung angehobene Aufprallstellung nachgiebig verstellt wird, wird ein beim Brust- oder Kopfaufprall des Fußgängers im Sinne eines günstigeren Energieabbaues zur Wirkung kommender Deformationsweg der Fahrzeugkarosserie geschaffen, der für verringerte Kopf- und Brustverzögerungen und damit für geringere Verletzungsrisiken sorgt.

Die DE 197 12 961 A1 zeigt ebenfalls einen Aufprallschutz durch eine im Kollisionsfall aktiv nachgiebig aufstellbarer Fronthaube, die windschutzscheibenseitig über eine Scharnieranordnung drehbar angeschlagen ist. Diese Scharnieranordnung ist über einen schwenkbar oder verschiebbar gelagerten Schamierträger so an der Karosserie des Vorderwagens befestigt, dass im Falle einer Kollision des Fahrzeuges mit einer Person die Fronthaube mittels einer an dem Scharnierträger angreifenden energiespeichernder Einrichtung, z. B. einem Feder-Kraftspeicher, nach oben verschwenkt bzw. verschoben, d. h. angehoben werden kann. Dieser bekannten Konstruktion liegt der Gedanke zugrunde, die Scharnieranordnung selbst mit dem angelenkten Schamierträger gegenüber der Karosserie anzuheben, so dass es nicht notwendig ist, eine komplexe Entkoppeleinrichtung zwischen Scharnieranordnung und Fronthaube im Falle eines Aufpralles vorzusehen.

Die Lösungen nach dem vorgenannten Stand der Technik zur aktiven Fronthaube mit windschutzscheibenseitiger Anhebung der Fronthaube über den Scharnierdrehanschlag sehen vor, dass das vordere Haubenschloss im geschlossenen Zustand in seiner Grundposition verbleibt. Dadurch ist der Frontbereich der Fronthaube relativ steif und hart, was für den direkten ersten Kontakt zwischen dem Fahrzeug und der Unfallperson zu direkten Verletzungen führen kann, insbesondere im unteren Rumpfbereich der Unfallperson (Oberschenkel und Bauchbereich).

Um dies zu vermeiden, sind gemäß der DE 197 21 565 A1 und DE 101 08 882 A1 auch Konstruktionen für das sensorgesteuerte Aufstellen der Fronthaube im vorderen, d.h. frontseitigen Hauben-Schlossbereich bekannt geworden. Die DE 197 21 565 A1 beschreibt ein konventionelles Haubenschloß, bestehend aus einem ersten Schließelement in Form eines Schließbolzens, der fest mit der Fronthaube verbunden ist, und einem aufbauseitigen, karosseriefesten Schlossgehäuse, in welchem einmal ein bewegliches zweites Schließelement in Form eines Schlossriegels sowie ein Fanghaken verschiebbar gehaltert sind. Die beiden Schließelemente dienen in konventioneller Weise der Ver- und Entriegelung der Fronthaube, wobei neben der konventionellen, manuellen Serviceentriegelung eine sensorgesteuerte Entriegelung im Kollisionsfall vorgesehen ist. Eine den Schließbolzen konzentrisch umgebende, bei geschlossener Fronthaube vorgespannte Spiralfeder dient nach erfolgter Entriegelung zur gewohnten selbsttätigen Aufstellung der Fronthaube um einen kleinen Hub, der durch den Fanghaken, die übliche "Haubensicherung", begrenzt ist, der zum vollständigen Freigeben der Haube zum Aufstellen in die Servicestellung in gewohnter Weise manuell betätigt werden muß. Bei dieser bekannten Konstruktion ist einmal der Deformationsweg sehr begrenzt, und zum anderen ist die Federkraft der vorgespannten Spiralfeder relativ schwach, damit die Haube weiterhin manuell reversierbar ist.

Die DE 101 08 882 A1 beschreibt ein Aufstellelement mit einem Hubelement, im konkreten zum Aufstellen der Fronthaube im Scharnierbereich. Hinsichtlich der Aufstellung im vorderen Haubenschlossbereich macht diese DE-Schrift nur die allgemeine Aussage, dass es durch ein Integrieren des Aufstellelementes in ein Haubenschloß möglich sei, das Aufstellelement als Nachrüstbausatz auszuführen. Wie dieses Integrieren konstruktiv auszubilden ist, ist in der Schrift nicht offenbart.

Die DE 199 57 868 A1 und die DE 101 11 146 A1 zeigen Aufstellelemente für eine aktive Fronthaube mit einem im Gefahrenfall aufstellbaren Hubelement, das in einem karosseriefest angebrachten Gehäuse geführt gehaltert ist, wobei kopfseitig auf dem Hubelement ein Schlossträger mit dem Haubenschloß montiert ist.

Die bekannte Konstruktion mit dem ausfahrbaren Hubelement, auf dem kopfseitig über einen Schlossträger das Haubenschloß montiert ist, benötigt zusätzliche Teile, beispielsweise ein separates Gehäuse für die Schlossteile und erfordert einen erheblichen Montageaufwand. Es bedingt weiterhin eine relativ große Ausdehnung des Aufstellelementes mit aufmontiertem Schlossträger in Aufstellrichtung.

Der Erfindung liegt die Aufgabe zugrunde, ausgehend von der eingangs bezeichneten Schutzvorrichtung diese hinsichtlich der Verbindung des Haubenschlosses mit dem aufstellbaren Hubelement so auszubilden, daß möglichst wenig Teile benötigt werden, der Montageaufwand gering gehalten werden kann und die Schutzvorrichtung in Aufstellrichtung kurz baut.

Die Lösung dieser Aufgabe gelingt gemäß der Erfindung bei einer Vorrichtung zum Schutz von Personen bei einem Frontalaufprall auf ein Kraftfahrzeug durch aktives Aufstellen dessen Fronthaube zumindest im frontseitigen Bereich des Haubenschlosses, das ein fest mit der Fronthaube verbundenes, erstes Schließelement und ein in einem aufbauseitigen Schlossgehäuse beweglich gehaltertes zweites Schließelement aufweist, mit einem Aufstellelement, bestehend aus einem karosseriefesten Gehäuse mit Bodenteil und einem darin geführten Hubelement, das mit dem Schlossgehäuse des Haubenschlosses verbunden ist und das sensorgesteuert mittels eines Energiespeichers um einen vorgegebenen Hub unter Aufstellung der Fronthaube ausfahrbar ist, wobei das Hubelement zugleich als aufbauseitiges Schlossgehäuse ausgebildet ist, dadurch, dass das Hubelement an den Schmalseiten jeweils eine zylindrische, kopfseitig verschlossene, und bis zum Bodenteil reichende Kammer aufweist, in der jeweils eine Aufstelldruckfeder aufgenommen ist und die über die Seitenwände miteinander verbunden sind.

Durch die Maßnahme nach der Erfindung kann das bisher übliche Gehäuse für die Schlossteile entfallen, da diese nunmehr direkt im Hubelement angebracht sind. Neben den Teilekosten reduziert sich daher auch der Montageaufwand für eine zusätzliche Montage des Schlossträgers (Gehäuses) auf dem Kopf des Hubelementes erheblich. Hinzu kommt, daß durch die Integration des Haubenschlosses in dem Hubelement die Schutzvorrichtung in Aufstellrichtung kurz baut, d.h. sehr kompakt ist und daher mit großem Vorteil nur einen geringen Einbauraum benötigt.

Ausgestaltungen der Erfindung sind in Unteransprüchen gekennzeichnet und ergeben sich auch aus der Figurenbeschreibung.

Anhand eines in der Zeichnung dargestellten Ausführungsbeispieles wird die Erfindung näher beschrieben.

Es zeigen:

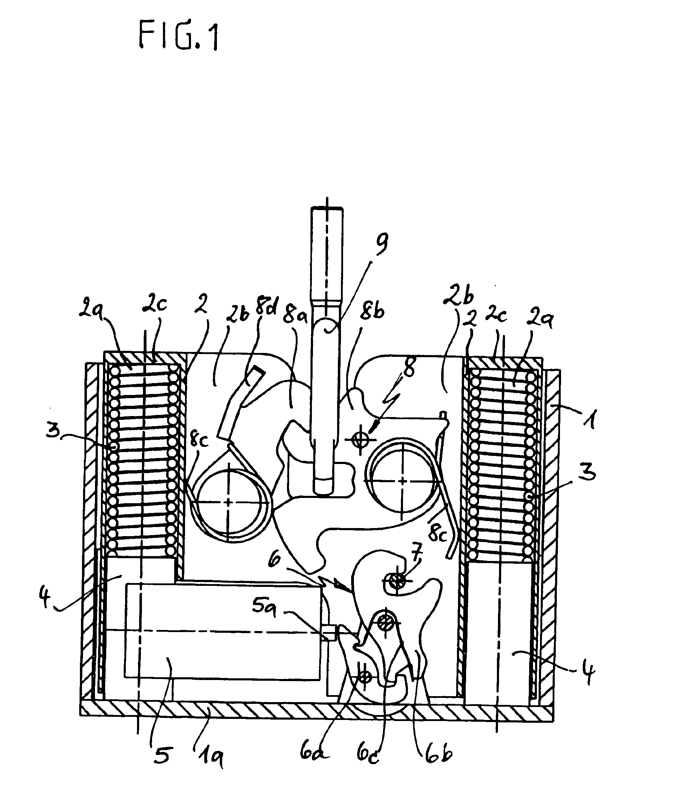

- Fig. 1: in einer Längsschnitt-Darstellung den Aufbau eines Aufstellelementes für eine aktive Aufstellung der Fronthaube eines PKW im Bereich des Haubenschlosses mit erfindungsgemäß im Aufstellelement integriertem Haubenschloß, im Grundzustand des Aufstellelementes,
- Fig. 2: in einer Längsschnitt-Darstellung das Aufstellelement nach Fig. 1, jedoch in aufgestelltem Zustand,
- Fig.3: in einer teilweise weggebrochenen isometrischen Darstellung das erfindungsgemäße Aufstellelement im aufgestellten Zustand nach Fig. 2, und
- Fig. 4: ebenfalls eine isometrische Darstellung des erfindungsgemäßen Aufstellelementes im aufgestellten Zustand nach Fig. 2 mit vollständig weggebrochener vorderer Seitenwand.

Das in den Zeichnungen dargestellte Aufstellelement weist ein karosseriefest im Frontbereich des PKW angebrachtes, im Querschnitt rechteckiges Gehäuse 1 mit Bodenteil 1 a und Seitenteil 1 b sowie ein darin linear aufstellbar geführtes, im Querschnitt ebenfalls rechteckiges Hubelement 2 auf. Das Hubelement 2 weist an den Schmalseiten jeweils eine zylindrische, kopfseitig verschlossene, und bis zum Bodenteil 1a reichende Kammer 2 a auf, in der jeweils eine Aufstell-Druckfeder 3 aufgenommen ist und die über Seitenwände 2 b miteinander verbunden sind. Das obere Ende jeder Druckfeder 3 stützt sich jeweils am kopfseitigen Verschluß 2 c der Kammer und das untere Ende an einem gehäusefesten Sockel 4 ab, der auch von der zugeordneten Kammer 2 a zur zusätzlichen Führung des Hubelementes 2 umschlossen ist. Das Aufstellelement weist ferner einen Auslöse-Stift 5 a ausstoßenden Aktuator 5, der durch einen Auslösemagneten oder durch ein pyrotechnisches Auslöseglied gebildet werden kann, in Verbindung mit einer Halte- und Auslösemechanik, hier in Form eines bekannten Doppelklinkensystems 6, auf, mit einer Auslöseklinke 6 a, die in Wirkeingriff mit dem Auslösestift 5 a bringbar ist, und einer Halteklinke 6 b, die im Grundzustand im lösbaren Wirkeingriff mit einem Haltebolzen 7 steht, der mindestens an einer Seitenwand 2 b des Hubelementes fest angebracht ist. Beide Klinken sind durch eine Feder 6 c vorgespannt und drehbar an einer Seitenwand 2 b gelagert.

Durch diesen Wirkeingriff ist das Aufstellelement gespannt, d.h. das Hubelement wird gegen die Vorspannkraft der Aufstell-Druckfedern 3 niedergehalten.

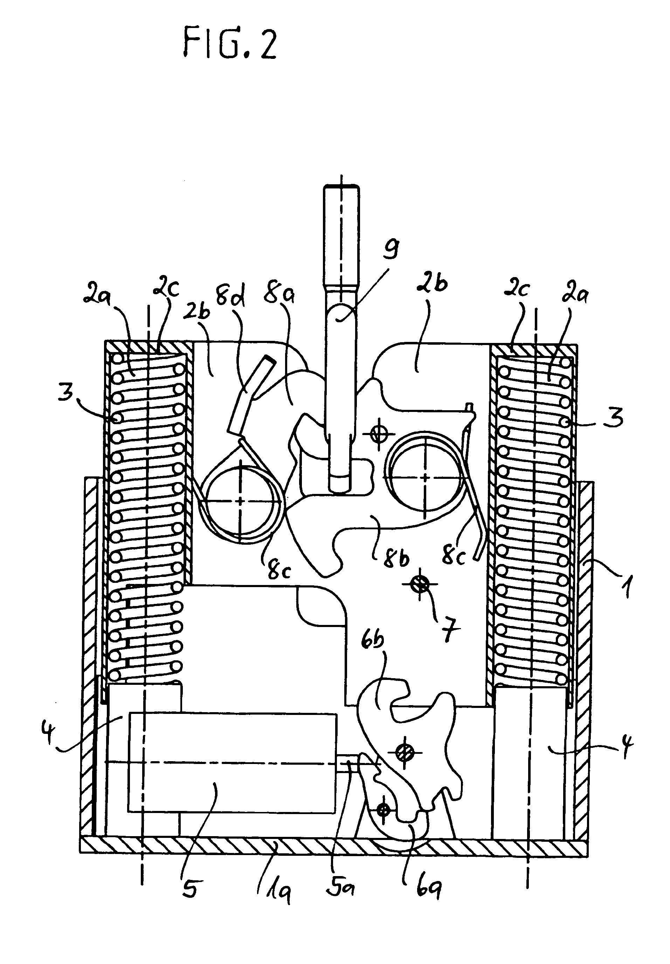

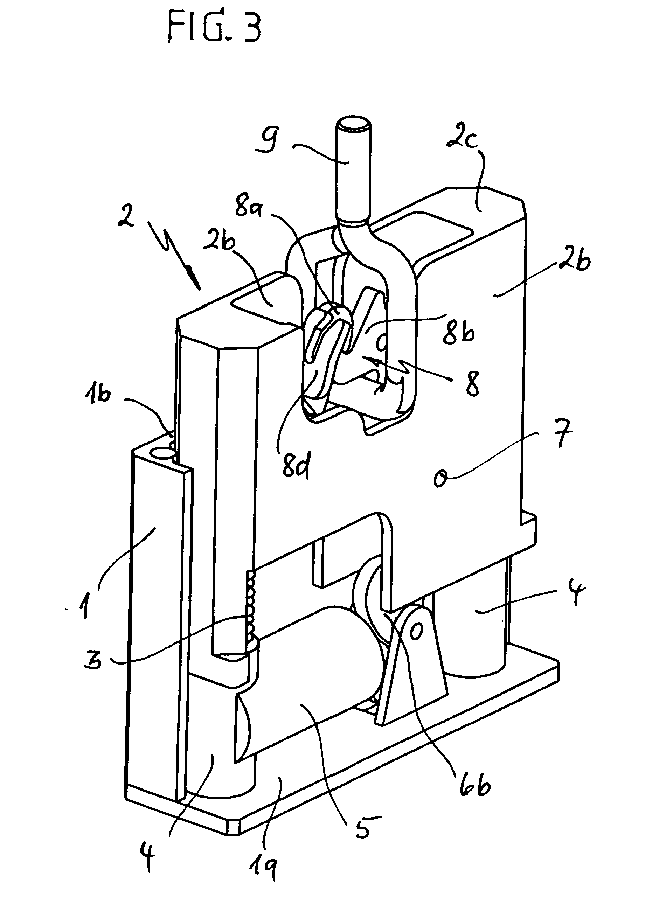

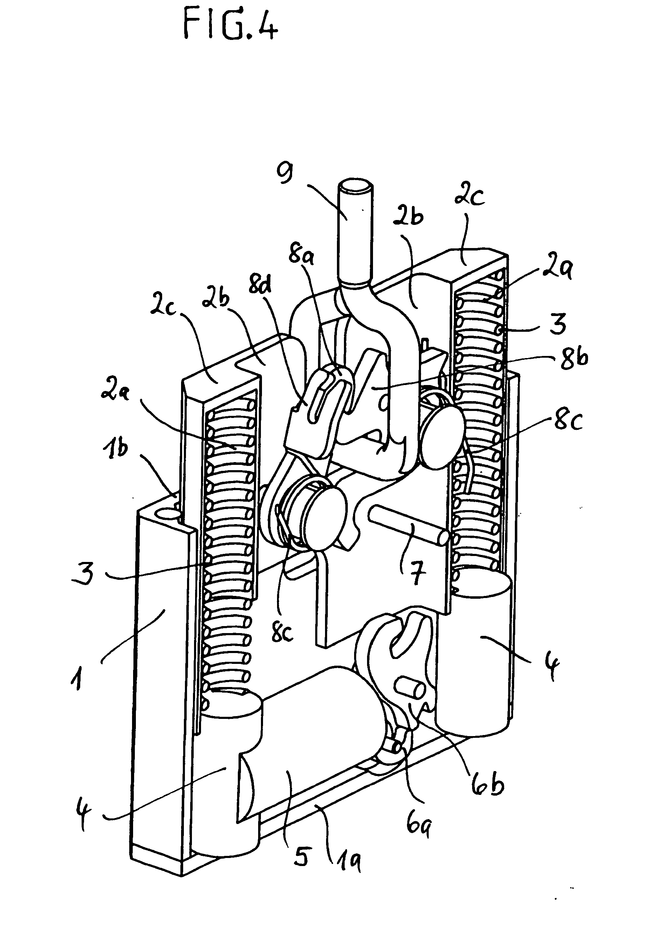

Wird der Aktuator 5 sensorgesteuert ausgelöst, verschwenkt der Auslöse-Stift 5 a die Auslöseklinke 6 a gegen die Vorspannkraft der Feder 6 c im Uhrzeigersinn, wodurch ihre Verriegelung mit der Halteklinke 6 b aufgehoben wird, und die Halteklinke 6 b aufgrund der Vorspannkraft der Feder 6 c unter Freigabe des Haltebolzens 7 gegen den Uhrzeigersinn verschwenkt wird. Aufgrund der vorgespannten Aufstelldruckfedern 3 wird dann das Hubelement 2 nach oben in die Position gemäß den Figuren 2-4 aufgestellt.

Erfindungsgemäß ist im Innern des Hubelementes 2, d.h. im Raum zwischen den Kammern 2 a, das Schlossgehäuse des Haubenschlosses mit dem beweglichen Schließelement 8 integriert. Erfindungsgemäß besteht das bewegliche Schließelement aus zwei drehbar an den Seitenwänden 2 b des Hubelementes 2 angelenkten Schlossklinken 8 a, 8 b, die jeweils durch eine Schenkelfeder 8 c vorgespannt sind und von denen die Schlossklinke 8 b einen Schließbügel 9 umgreift, der seinerseits an der nicht dargestellten Fronthaube des PKW befestigt ist. Die Schlossklinke 8 a hält dabei die Schlossklinke 8 b nieder.

Da die Schlossklinken 8 a, 8 b an dem Hubelement 2 angelenkt sind, werden sie zusammen mit dem weiterhin im Schloß verriegelten Schließbügel 9 beim Aufstellen des Hubelementes unter Aufstellen der Fronthaube mit aufgestellt.

An der Schlossklinke 8 a ist ein Fortsatz 8 d mit einem Einschnitt ausgebildet, in welchem z.B. ein Zugseil eines Bowdenzuges zum üblichen manuellen Entriegeln des Haubenschlosses 8 einhängbar ist. Bei diesem Entriegelungsvorgang wird die Schlossklinke 8 a gegen den Uhrzeigersinn und die Kraft der Feder 8 c verschwenkt, wodurch sie außer Wirkeingriff mit der anderen Schlossklinke 8 b kommt und diese im Uhrzeigersinn, durch die Kraft der Schenkelfeder 8 c verschwenkt wird. Dadurch kommt die Schlossklinke 8 b außer Wirkeingriff mit dem Schließbügel 9. Dieser springt dann in üblicher Weise unter der Kraft einer Feder (nicht dargestellt) zusammen mit der Fronthaube um einen kleinen Hub auf.

Es versteht sich, daß Modifikationen hinsichtlich des dargestellten Ausführungsbeispieles möglich sind. So kann anstelle der Doppelklinken-Halte- und Auslöseeinheit 6 in Verbindung mit dem Haltebolzen 7 und oben in den Kammern 2 a angeordneten Aufstell-Druckfedem eine zentrische Rasthebel-Halte- und Auslösemechanik mit vertikalem Einzugsstift des Aktuators entsprechend der älteren deutschen Patentanmeldung 103 44 445.9-42, deren Offenbarungsinhalt durch Bezugnahme mit zur Offenbarung der vorliegenden Anmeldung gemacht wird, in Verbindung mit unterhalb des Hubelementes im Gehäuse angeordneten Aufstellfedern verwendet werden. Auch kann das bewegliche Schließelement 8 auf andere Weise ausgebildet werden, z.B. mit einer Halte-Schloßklinke, die mit einer maulförmigen Öffnung, welche den Schließbügel lösbar haltend umschließt und einer daneben angeordneten Ver- bzw. Entriegelungs-Schloßklinke. Auch kann die konstruktive Gestaltung der Aufnahmen der Aufstelldruckfedern im Hubelement bzw. die Gestaltung des Hubelementes selbst je nach den speziellen Erfordernissen variieren. Wesentlich ist dabei stets, daß das Schlossgehäuse mit dem beweglichen Schließelement des Haubenschlosses innerhalb eines Freiraumes in dem Hubelement selbst integriert ist.

Die Konstruktion kann auch so getroffen sein, daß das Haubenschloß selbsttätig beim Aufstellen des Hubelementes entriegelt wird.

Es sind auch Ausführungen der "aktiven Motorhaube" möglich, bei denen nicht nur eine Aufstellung im frontseitigen Schlossbereich erfolgt, sondern bei der zusätzlich die Scharniere der Fronthaube aufstellbar sind, z.B. durch eine Vorrichtung nach der älteren deutschen Patentanmeldung 102 43 497.2, bestehend aus einem Schamierträger für die mittelbare karosserieseitige Anlenkung, der aufstellbar an der Karosse des Vorderwagens angebracht ist, und aus einer an dem Schamierträger angreifenden energiespeichemden Einrichtung in Form einer Federspeicher-Anordnung sowie aus einer sensorgesteuerten Haltevorrichtung für einen Wirkeingriff mit dem Schamierträger.

### Bezugszeichenliste

- 1: Gehäuse
- 1 a: Bodenteil
- 1 b: Seitenteile
- 2: Hubelement
- 2 a: Kammer
- 2 b: Seitenwände
- 2 c: kopfseitiger Verschluß
- 3: Aufstell-Druckfeder
- 4: Sockel
- 5: Aktuator
- 5 a: Auslöse-Stift
- 6: Doppelklinkensystem
- 6 a: Auslöseklinke
- 6 b: Halteklinke
- 6 c: Vorspannfeder
- 7: Haltebolzen
- 8: Haubenschloß - Schließelement
- 8 a, b: Schlossklinken
- 8 c: Schenkelfeder
- 8 d: Fortsatz
- 9: Schließbügel

## Patentansprüche

1. Vorrichtung zum Schutz von Personen bei einem Frontalaufprall auf ein Kraftfahrzeug durch aktives Aufstellen dessen Fronthaube zumindest im frontseitigen Bereich des Haubenschlosses, das ein fest mit der Fronthaube verbundenes, erstes Schließelement (9) und ein in einem aufbauseitigen Schlossgehäuse beweglich gehaltertes zweites Schließelement (8) aufweist, mit einem Aufstellelement, bestehend aus einem karosseriefesten Gehäuse (1) mit Bodenteil (1a) und einem darin geführten Hubelement (2), das mit dem Schlossgehäuse des Haubenschlosses verbunden ist und das sensorgesteuert mittels eines Energiespeichers um einen vorgegebenen Hub unter Aufstellung der Fronthaube ausfahrbar ist, wobei das Hubelement (2) zugleich als aufbauseitiges Schlossgehäuse ausgebildet ist, **dadurch gekennzeichnet, dass** das Hubelement (2) an den Schmalseiten jeweils eine zylindrische, kopfseitig verschlossene, und bis zum Bodenteil (1a) reichende Kammer (2a) aufweist, in der jeweils eine Aufstelldruckfeder (3) aufgenommen ist und die über die Seitenwände (2b) miteinander verbunden sind.

2. Vorrichtung nach Anspruch 1, **dadurch gekennzeichnet, daß** an der Fronthaube ein als Schließbügel (9) ausgebildetes erstes Schließelement für den verriegelnden Wirkeingriff mit zwei im Hubelement (2) angelenkten, das zweite Schließelement (8) bildenden Schlossklinken (8 a, 8 b) angebracht ist und sowohl am Hubelement (2) als auch am umgebenden Gehäuse (1) Einführhilfen für den Schließbügel (9) ausgebildet sind.

3. Vorrichtung nach Anspruch 1 oder 2, **dadurch gekennzeichnet, daß** das karosseriefeste Gehäuse (1) und das in ihm geführte Hubelement (2) einen im wesentlichen rechteckigen Querschnitt aufweisen.

4. Vorrichtung nach Anspruch 3, **dadurch gekennzeichnet, daß** Führungsausbildungen an beiden Enden des Hubelementes (2) zur Aufnahme von jeweils einer Aufstell-Druckfeder (3) als Energiespeicher, und Seitenwände (2 b) zwischen den endseitigen Führungsausbildungen, die einen Freiraum zur Ausbildung des Schlossgehäuses mit dem darin gehalterten zweiten Schließelement (8) bilden, vorgesehen sind.

5. Vorrichtung nach Anspruch 4, **dadurch gekennzeichnet, daß** die Führungsausbildungen jeweils durch die kopfseitig geschlossene zylindrische Kammer (2 a) gebildet sind, die Höhe des Hubelementes (2) im wesentlichen derjenigen des Gehäuses (1) entspricht und am Gehäuseboden (1 a) fluchtend mit den Kammeröffnungen säulenförmige Sockel (4) angebracht sind, auf denen sich jeweils die Unterseite der Aufstell-Druckfeder (3) abstützt, deren Oberseite am kopfseitigen Verschluß (2 c) der zugehörigen Kammer anliegt.

6. Vorrichtung nach Anspruch 3, **dadurch gekennzeichnet, daß** die Höhe des Hubelementes (2) nur einem Teil der Höhe des Gehäuses (1) entspricht und unterhalb des Hubelementes Aufstell-Druckfedern (3), geführt in am Gehäuseboden (1 a) befestigte Säulen, angeordnet sind.

7. Vorrichtung nach Anspruch 2 und einem der Ansprüche 3 bis 6, **dadurch gekennzeichnet, daß** die Schlossklinken (8 a, 8 b) innen an den Längsseiten des Hubelementes (2) drehbar und federvorgespannt angelenkt sind.

8. Vorrichtung nach einem der Ansprüche 1 bis 7, **dadurch gekennzeichnet, daß** zum lösbaren Niederhalten des Hubelementes (2) im Grundzustand ein sensorgesteuerter Aktuator (5) mit einer Doppelklinken-Halte- und Auslösemechanik (6) in Verbindung mit einem Haltebolzen (7) am Hubelement (2) vorgesehen ist.

9. Vorrichtung nach einem der Ansprüche 1 bis 7, **dadurch gekennzeichnet, daß** zum lösbaren Niederhalten des Hubelementes (2) im Grundzustand ein sensorgesteuerter Aktuator mit einer zentralen Rastverklinkung zwischen Hubelement und Gehäuse als Halte- und Auslösemechanik vorgesehen ist.

## Claims

1. A device for the protection of persons in the event of a frontal impact on a motor vehicle by actively raising the bonnet thereof at least in the front region of the bonnet lock, which has a first locking member (9) fixedly connected to the bonnet and a second locking member (8) which is movably mounted in a lock housing provided on the body, with a raising component comprising a housing (1) which is fixed to the body and has a bottom part (1a), and a lifting member (2) which is guided in the housing (1) and is connected to the lock housing of the bonnet lock and which is extendable through a predetermined stroke in a sensor-controlled manner by means of an energy accumulator in order to raise the bonnet, wherein the lifting member (2) simultaneously forms the lock housing provided on the body, **characterised in that** the lifting member (2) has, on each of its narrow sides, a cylindrical chamber (2a) which is closed at the top end and extends as far as the bottom part (1a) and in which a respective lifting compression spring (3) is accommodated, which chambers (2a) are connected to one another via the side walls (2b).

2. A device according to claim 1, **characterised in that** a first locking member formed as a locking stirrup (9) is mounted on the bonnet and is intended to engage in a locking manner with two locking pawls (8a, 8b) which form the second locking member (8) and are articulated in the lifting member (2), and insertion aids for the locking stirrup (9) are formed on both the lifting member (2) and the surrounding housing (1).

3. A device according to claim 1 or 2, **characterised in that** the housing (1) fixed to the body and the lifting member (2) guided in the housing (1) have a substantially rectangular cross-section.

4. A device according to claim 3, **characterised in that** guide formations are provided at both ends of the lifting member (2) and are intended to accommodate a respective lifting compression spring (3) serving as an energy accumulator, and side walls (2b) are provided between the end guide formations, which form a free space for formation of the lock housing with the second locking member (8) mounted therein.

5. A device according to claim 4, **characterised in that** the guide formations are each formed by a cylindrical chamber (2a) closed at the top end, the height of the lifting member (2) substantially corresponds to that of the housing (1), and column-shaped bases (4) aligned with the chamber openings are mounted on the housing bottom (1a), on which is supported the lower end of the respective lifting compression spring (3), the upper end of which rests against the top closure (2c) of the associated chamber.

6. A device according to claim 3, **characterised in that** the height of the lifting member (2) only corresponds to part of the height of the housing (1), and lifting compression springs (3) guided in columns fixed to the housing bottom (1a) are arranged underneath the lifting member.

7. A device according to claim 2 and any one of claims 3 to 6, **characterised in that** the locking pawls (8a, 8b) are rotatably articulated under spring preload on the inside of the longitudinal sides of the lifting member (2).

8. A device according to any one of claims 1 to 7, **characterised in that** a sensor-controlled actuator (5) with a double-pawl holding and release mechanism (6) is provided in conjunction with a holding bolt (7) on the lifting member (2) for releasably holding down the lifting member (2) in the normal position.

9. A device according to any one of claims 1 to 7, **characterised in that** a sensor-controlled actuator with a central locking-pawl arrangement between the lifting member and the housing is provided as a holding and release mechanism for releasably holding down the lifting member (2) in the normal position.

## Revendications

1. Dispositif de protection de personnes lors d'une collision frontale avec un véhicule automobile par soulèvement actif de son capot avant au moins dans la zone frontale de la serrure de capot, qui présente un premier élément de fermeture (9) relié solidement au capot avant et un deuxième élément de fermeture (8) maintenu de manière mobile dans un boîtier de serrure côté structure, avec un élément de soulèvement, composé d'un boîtier (1) fixé à la carrosserie avec élément de fond (1a) et d'un élément de levage (2) guidé à l'intérieur, qui est relié au boîtier de la serrure du capot et qui, commandé par capteur, peut être sorti d'une course prédéfinie en soulevant le capot au moyen d'un accumulateur d'énergie, l'élément de levage (2) étant réalisé en même temps sous forme de boîtier de serrure côté structure, **caractérisé en ce que** l'élément de levage (2) présente au niveau des côtés étroits respectivement une chambre (2a) cylindrique, fermée côté tête et allant jusqu'à l'élément de fond (1a), dans laquelle est logé respectivement un ressort de pression de soulèvement (3) et qui sont reliés les uns aux autres par le biais des parois latérales (2b).

2. Dispositif selon la revendication 1, **caractérisé en ce qu'**un premier élément de fermeture réalisé sous forme d'étrier de fermeture (9) est monté au niveau du capot avant pour la prise active verrouillante avec deux cliquets de serrure (8a, 8b) articulés dans l'élément de levage (2) et formant le deuxième élément de fermeture (8) et des auxiliaires d'introduction pour l'étrier de fermeture (9) sont réalisés aussi bien au niveau de l'élément de levage (2) qu'au niveau du boîtier (1) entourant.

3. Dispositif selon la revendication 1 ou 2, **caractérisé en ce que** le boîtier (1) fixé à la carrosserie et l'élément de levage (2) guidé dans celui-ci présentent une section transversale essentiellement rectangulaire.

4. Dispositif selon la revendication 3, **caractérisé en ce que** sont prévues des formations de guidage aux deux extrémités de l'élément de levage (2) pour la réception de respectivement un ressort de pression de soulèvement (3) en tant qu'accumulateur d'énergie, et des parois latérales (2b) entre les formations de guidage côté extrémité, qui forment un espace libre pour la réalisation du boîtier de serrure avec le deuxième élément de fermeture (8) qui y est maintenu.

5. Dispositif selon la revendication 4, **caractérisé en ce que** les formations de guidage sont formées respectivement par la chambre (2a) cylindrique fermée côté tête, la hauteur de l'élément de levage (2) correspond essentiellement à celle du boîtier (1) et des socles (4) en forme de colonne sont montés au niveau du fond du boîtier (1a) en alignement avec les ouvertures de la chambre, sur lesquels s'appuie respectivement la face inférieure du ressort de pression de soulèvement (3), dont la face supérieure s'appuie contre la fermeture (2c) côté tête de la chambre associée.

6. Dispositif selon la revendication 3, **caractérisé en ce que** la hauteur de l'élément de levage (2) ne correspond qu'à une partie de la hauteur du boîtier (1) et des ressorts de pression de soulèvement (3), guidés dans des colonnes fixées au fond du boîtier (1a), sont agencés en dessous de l'élément de levage.

7. Dispositif selon la revendication 2 et l'une quelconque des revendications 3 à 6, **caractérisé en ce que** les cliquets de serrure (8a, 8b) sont articulés de manière rotative et de façon précontrainte à l'intérieur au niveau des côtés longs de l'élément de levage (2).

8. Dispositif selon l'une quelconque des revendications 1 à 7, **caractérisé en ce que** pour maintenir l'élément de levage (2) vers le bas de manière amovible à l'état initial, il est prévu un actionneur commandé par capteur (5) avec un mécanisme de retenue et de déclenchement à double cliquet (6) en relation avec un boulon de retenue (7) au niveau de l'élément de levage (2).

9. Dispositif selon l'une quelconque des revendications 1 à 7, **caractérisé en ce que** pour maintenir l'élément de levage (2) vers le bas de manière amovible à l'état initial, il est prévu un actionneur commandé par capteur avec encliquetage central entre l'élément de levage et le boîtier sous forme de mécanisme de retenue et de déclenchement.
